# EUROPEAN PATENT SPECIFICATION

(11) **EP 3 025 809 B1**
(45) Date of publication and mention of the grant of the patent: **08.11.2017**
(21) Application number: 15184929.6
(22) Date of filing: 11.09.2015
(51) Int. Cl.: B22F 3/105, B22F 5/04, C21D 9/00, C22C 19/03, C22C 19/07, C22C 38/00, C22F 1/10

(54) **METHOD FOR MANUFACTURING A COMPONENT USING AN ADDITIVE MANUFACTURING PROCESS**
VERFAHREN ZUR HERSTELLUNG EINER KOMPONENTE MITTELS ADDITIVEM FERTIGUNGSVERFAHREN
PROCÉDÉ DE FABRICATION D'UN COMPOSANT AU MOYEN D'UN PROCESSUS DE FABRICATION ADDITIVE

(30) Priority: 28.11.2014 EP 14195477
(43) Date of publication of application: 01.06.2016
(73) Proprietor: Ansaldo Energia IP UK Limited, London W1G 9DQ (GB)
(72) Inventor: Engeli, Roman, 8050 Zurich (CH); Etter, Thomas, 5037 Muhen (CH); Meidani, Hossein, 5420 Ehrendingen (CH)
(74) Representative: Bernotti, Andrea

(56) References cited:
- EP-A1- 2 586 548

## Description

### BACKGROUND OF THE INVENTION

The present invention relates to the technology of additive manufacturing processes. It refers to a method for manufacturing a component using an additive manufacturing process according to the preamble of claim 1.

### PRIOR ART

SLM (Selective Laser Melting)-generated articles have different microstructure compared to conventionally cast materials of the same alloy. The microstructure is much more homogeneous, does show finely distributed precipitates and practically no segregation and has a several factors smaller grain size. These characteristics are optimal e.g. for tensile strength and LCF (Low Cycle Fatigue) strength and for these properties, standard SLM manufactured components exceed their cast counterparts significantly.

On the other hand, especially for high temperature properties, the small grain size is a drawback due to the facilitated diffusion that grain boundaries provide. High temperature properties such as creep or oxidation resistance are therefore lower than that of similar cast material, which is especially relevant to materials such as nickel based, cobalt based or iron based alloys used at high temperature (e.g. in gas turbines).

To avoid these problems, a recrystallization heat treatment (HT) has been developed for such additively manufactured superalloys, which results in an almost complete crystallographic isotropy and in a considerably larger grain size than what is obtained after standard HT (see document EP 2 586 887 A1). However, while this considerably increases the creep strength of SLM-generated superalloys, it might also decrease the LCF, TMF and tensile properties. Therefore it would be desirable to tailor the grain size within the part, for example according to the prevailing load type.

Document EP 2 586 887 A1 discloses a method to recrystallize SLM generated parts to increase the grain size and thereby improve creep and oxidation properties. However, using this method, the grain size cannot be locally tailored and the microstructure homogeneously recrystallizes in the whole SLM-generated part.

This is a good solution to improve creep properties. However, as the grain size cannot be tailored within a component, one needs to choose between improved creep and improved LCF properties.

Document EP 2 586 548 A1 discloses the general idea to tailor the grain size in an entire article according to the load type/requirements amongst others for SLM-generated parts through adjustment of the process parameters.

In document EP 2 586 548 A1, the grain size is directly generated in the SLM process, e.g. by different melt pool sizes, use of a second laser or other means.

This direct approach only allows a very limited variation in grain size. Furthermore, it requires lasers with different intensity distributions (e.g. multi-laser system, core-shell principle (lasers with large and small beam diameter)).

Document US 2009/0263624 A1 discloses the principle of subdividing a component in multiple parts in order to process them with different parameters optimized for the part characteristics. However, no intention to optimize the microstructure is given.

The prior art documents referred to in document EP 2 586 548 A1 and the related search report neither allow to selectively tailor the grain size nor refer to selective laser melting.

The recrystallization of SLM-generated superalloys has also been observed in F. Liu, X. Lin, M. Song, W. Zhao, J. Chen, and W. Huang, "Effect of intermediate heat treatment temperature on microstructure and notch sensitivity of laser solid formed Inconel 718 superalloy," Journal of Wuhan University of Technology-Materials Science Edition, vol. 26, no. 5, pp. 908-913, 2011 In this document, it was shown that in an overlap region, the recrystallization behavior is different from that in the weld center.

EP 2 586 548 A1 discloses a method for manufacturing a component with a special grain size distribution, especially for gas turbines and other thermomachinery. According to the method, a data set is provided for use in an additive manufacturing process; the component is manufactured using the additive manufacturing process and data set and is subjected to a heat treatment in order to change the microstructure of said manufactured component. The grain size distribution is directly obtained through the manufacturing process, whereby the grins size is controlled by controlling the cooling rate of the melt pool within the additive manufacturing process which is realized by controlling the local thermal gradients at the melting zone.

### SUMMARY OF THE INVENTION

It is an object of the present invention to teach a method for manufacturing a component, especially for being used in gas turbines and other turbo machinery, which is optimized for its use by local variations of its microstructure.

This object is obtained by a method according to Claim 1.

The method according to the invention for manufacturing a component, especially for gas turbines and other thermo machinery, comprises the steps of:
providing a data set defining said component for being used in an additive manufacturing process;
manufacturing said component by means of said additive manufacturing process according to said data set; and
subjecting said manufactured component to a heat treatment in order to change the microstructure of said manufactured component.

An optimized component is achieved in that:
at least two different component volumes are defined within said component prior to the manufacturing step;
at least two different process parameters are chosen for said additive manufacturing process, which process parameters result in different driving forces for a recrystallization and therefore a different recrystallization behavior in the material of said component;
said additive manufacturing process is executed with one of said at least two process parameters being used during manufacturing a first of said at least two component volumes, resulting in a first recrystallization behavior in said first component volume, and with the other of said at least two process parameters being used during manufacturing a second of said at least two component volumes, resulting in a second recrystallization behavior different from said first recrystallization behavior, in said second component volume; and
said manufactured component is subjected to a heat treatment, with a holding temperature, wherein the holding temperature lies above a recrystallization temperature of at least one of said at least two component volumes.

According to an embodiment, the recrystallization behavior comprises a recrystallization temperature, the first recrystallization behavior comprises a first recrystallization temperature and the second recrystallization behavior comprises a second recrystallization temperature, and that said manufactured component is subjected to a heat treatment, with a holding temperature that lies between said first and second recrystallization temperatures. This results in a temperature above the recrystallization temperature of at least one of said at least two volumes, resulting in recrystallization of all volumes having a recrystallization temperature below the holding temperature, whereas the typical small grained, anisotropic microstructure of the as-built condition is maintained in all volumes having a recrystallization temperature above the holding temperature.

According to an embodiment, the recrystallization behavior comprises a change in grain size (recrystallized grain size), the first recrystallization behavior comprises a first grain size and the second recrystallization behavior comprises a second grain size different from the first grain size, and wherein the holding temperature (T_HT) lies above a recrystallization temperature of at least two of said at least two component volumes. This results in a first grain size in at least one of said at least two volumes and in a second grain size in the other of said at least two volumes. Different recrystallization behaviors can result in different grain sizes.

According to an embodiment, at least three different component volumes are provided, namely a first component volume, a second component volume and a third component volume, are defined and three process parameters (A, B, C) are chosen such that after the heat treatment at the holding temperature (T_HT) the first component volume has a first grain size (which may be unchanged from the first grain size prior to heat treatment, in which case it is still the non-recrystallized grain size), the second component volume has a second grain size and the third component volume has a third grain size, wherein the first grain size, the second grain size and the third grain size are different from one another. Preferably, the first component volume has a recrystallization temperature above the holding temperature, and the second and third component volumes have recrystallization temperatures below the holding temperature.

According to an embodiment of the invention said additive manufacturing process is a Selective Laser Melting (SLM) process.

Specifically, the material of said component is one of a high temperature Ni-, Co-and Fe-based alloy.

Specifically, said at least two process parameters differ in at least one of the following characteristics:
- weld pool size
- energy input, especially scan speed and/or laser power and/or laser mode
- hatch distance
- layer thickness
- laser beam diameter/intensity distribution/focal plane position
- Additional volume exposure/remelting/preheating/reheating
- Scanning strategy, especially unidirectional or bidirectional or rotating.

According to another embodiment of the invention in use of said component the first of said at least two different component volumes is subjected to a creep load and the second of said at least two different component volume is subjected to an LCF load, and said process parameters and said subsequent heat treatment temperature are chosen such that a coarse recrystallized grain structure is established in said first component volume, and a fine grain structure is established in said second component volume.

According to another embodiment of the invention said component is part of a turbo machine, especially a gas turbine. Specifically, said component is a blade of a gas turbine. Even more specifically, said blade has a leading edge and a trailing edge, that component volumes at said leading edge and said trailing edge are manufactured with a fine grain structure suitable for LCF-loaded areas, and the component volume between said leading edge and said trailing edge is manufactured with a coarse recrystallized grain structure suitable for creep-loaded areas.

Preferably said component processed by SLM is made of a Ni-based superalloy, that said at least two process parameters (A, B) are chosen, such that the resulting recrystallization start temperatures (T_RX_A, T_RX_B) lie in a range around 1200°C and differ by at least 20°C.

Preferably, the heat treatment comprises the step of applying fast heating with a heating rate of at least 25 °C/min.

Preferably, the step of manufacturing includes building up a crystallographic orientation (a preferred crystallographic orientation), and the heat treatment removes the crystallographic orientation in at least one component volume. The crystallographic orientation may comprise one or more orientations, for example a primary orientation and a secondary orientation. The heat treatment may remove one or more of the orientations.

### BRIEF DESCRIPTION OF THE DRAWINGS

The present invention is now to be explained more closely by means of different embodiments and with reference to the attached drawings.
- Fig. 1: shows a cross-section of a blade with different component volumes being SLM-manufactured with different process parameters A and B according to an embodiment of the invention;
- Fig. 2: shows an exemplary heat treatment (HT) curve for achieving different recrystallization of the blade of Fig. 1 according to an embodiment of the invention;
- Fig. 3: shows the finished blade after the heat treatment of Fig. 2 with differing microstructure in the different component volumes;
- Fig. 4: shows the main process steps in manufacturing the blade of Fig. 3;
- Fig. 5: shows another embodiment of the present invention, where the different process parameters are applied layer-wise in an SLM process;
- Figs. 6A and 6B: compares both microstructures in area A (Fig. 6A, no recrystallization) and area B (Fig. 6B, recrystallization); and
- Fig. 7: compares both microstructures in area A and area B before and after HT.
- Fig. 8: shows an example microstructure of a possible embodiment of the present invention, where a partial volume B (letters ALS) is processed with parameters resulting in a coarse grain size after recrystallization and a second partial volume C is processed with parameters resulting in fine grain size after recrystallization.

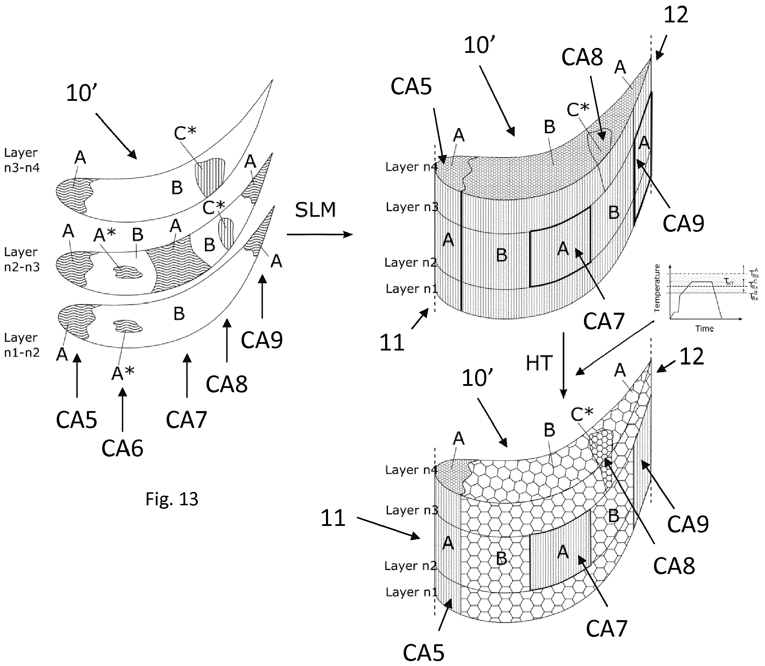

Figs. 9, 10, 11, 12 and 13 show an example similar to that in Figs. 1, 2, 3, 4 and 5 but with three different process parameters A, B, C rather than two different process parameters resulting in three different microstructures after recrystallization (not recrystallized (A), recrystallized to coarse grain size (B), recrystallized to fine grain size (C)).

### DETAILED DESCRIPTION OF DIFFERENT EMBODIMENTS OF THE INVENTION

The present invention discloses a method to produce parts/components, especially for differently loaded parts of turbo machines like gas turbines, fabricated by additive manufacturing techniques (e.g. selective laser melting SLM) with selectively tailored grain size, which is for example optimized for the site-specific load. By applying different specific process parameter settings to different areas of the part, the recrystallization behavior can be tuned such that after a suitable heat treatment, different microstructures are obtained in the different areas of the manufactured part. For example, the start temperatures of these areas can be tuned such that a heat treatment temperature can be found at which only the desired areas recrystallize. In another example, the grain size resulting after recrystallization can be tailored such that after heat treatment at a temperature where more than one of the different areas recrystallize, different grain sizes are obtained in these different, recrystallized areas.

Choosing suitable process parameters and subsequent heat treatment temperatures, grain structures can be locally set. For example, coarse recrystallized grain structures and/or fine recrystallized grain structures can be locally set, for example in creep loaded regions (or volumes) (e.g. between leading and trailing edge of a blade), while a fine grain structure (such as a fine anisotropic non-recrystallized grain structure) is kept in other regions, for example LCF (Low Cycle Fatigue) loaded regions (e.g. at the leading and trailing edge of a blade).

The present invention is based upon the finding that the recrystallization behavior (for example the recrystallization temperature and/or the recrystallization grain size) of SLM-generated material strongly depends on the processing parameters applied. The recrystallization temperature (or recrystallization start temperature) is the minimum temperature at which recrystallization occurs. The recrystallization temperature depends on the driving force for recrystallization in the material, mainly the dislocation density, residual stresses and initial grain size before heat treatment. The resulting grain size after recrystallization is determined by the grain nucleation density, which mainly depends on the dislocation density and the initial grain size before heat treatment. These driving forces and the grain nucleation density can be influenced by the SLM processing parameters (laser power, scan velocity, layer thickness, hatch distance, laser beam diameter, second area exposure, etc.).

It is proposed to define two or more process parameters A and B, which result in different driving forces in the SLM-processed material and therefore in different recrystallization start temperatures T_RX_A and T_RX_B (RX stands for recrystallization), whereas T_RX_A > T_RX_B, meaning that a higher heat treatment (HT) temperature is required in order that a material processed with parameter settings A recrystallizes.

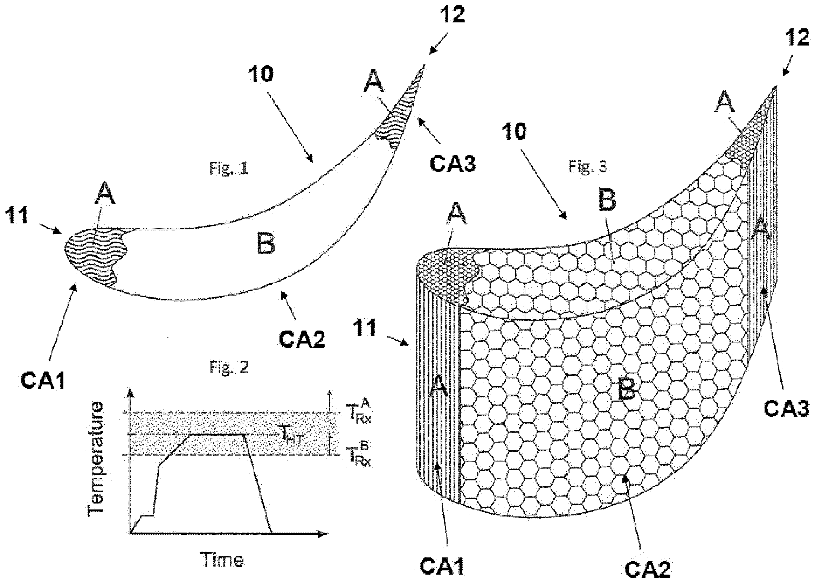

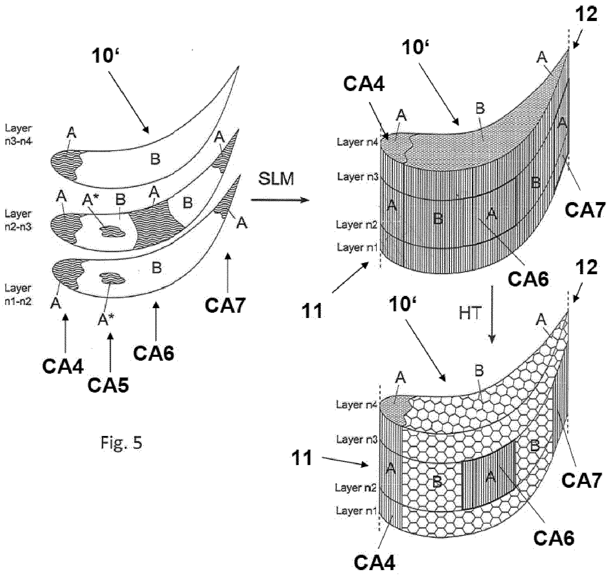

The component to be manufactured, e.g. a turbine blade or vane, is then divided into volumes in which a coarse recrystallized grain size is desired (CA2 in blade 10 of Fig. 1-4; process parameter B) and volumes (CA1, CA3 in Fig. 1-4; CA4-CA7 in Fig. 5; process parameter A) in which a fine grain size is desired, for example according to the prevailing load type/size during service.

After slicing the 3D file of the component (blade 10 in Fig. 1-4) in layers, areas which lay within A volumes CA1 and CA3 are processed with process parameter A and areas laying in B volume CA2 are processed with parameter set B (see Fig. 1, example of a blade 10, in which the leading and trailing edge 11 and 12, respectively, is mainly LCF/TMF loaded and the rest creep loaded).

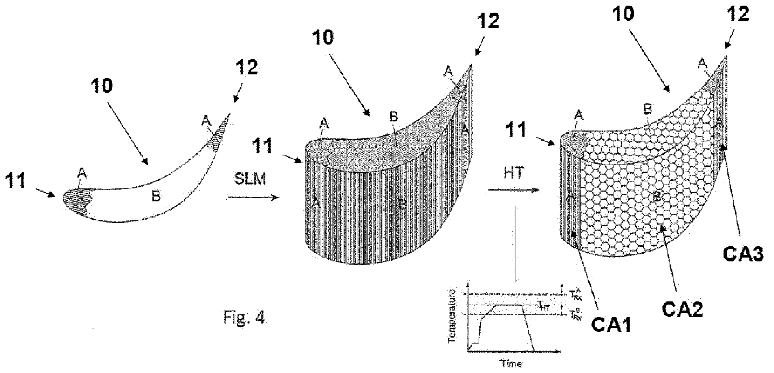

After the SLM process, a component is obtained in which the microstructure is mostly homogenous and does not or only slightly differs between A volumes CA1, CA3 and B volume CA2 (see Fig. 4, center part). However, the driving force for recrystallization and therefore the recrystallization start temperature T_RX_A and T_RX_B are different.

The part (in this case blade 10) is then subjected to a recrystallization heat treatment HT, whose holding temperature T_HT lies between T_RX_A and T_RX_B (see Fig. 2 and Fig. 4). This HT results in a recrystallization of the B volume CA2, which were processed with parameter set B, whereas the fine grain structure of the A volumes CA1, CA3 is maintained (See Fig. 3 for the resulting blade 10 and Fig.4 for the related process). Optionally, the HT includes the step of applying fast heating with a heating rate of at least 25 °C/min. The heating is preferably between 25 and 60 °C/min. This can avoid or at least reduce precipitation into an unwanted phase.

If three or more different process parameters are used, by said approach three or more component volumes can be obtained in which one or more volumes have a recrystallization start temperature below the heat treatment holding temperature, resulting in an recrystallized microstructure in which the grain size, which depends on the internal driving force, is defined by the process parameters, and in which further volumes can have recrystallization start temperatures above the heat treatment holding temperature which result in a non-recrystallized microstructure.

The sizes of the one or more different volumes which are processed with at least two different process parameters can be in the region of the component size itself down to sizes in the micrometer range, limited only by the thickness of the layer or the scan line dimensions used in the selected additive manufacturing process. The different volumes can be related to the part's geometry or loading, for example.

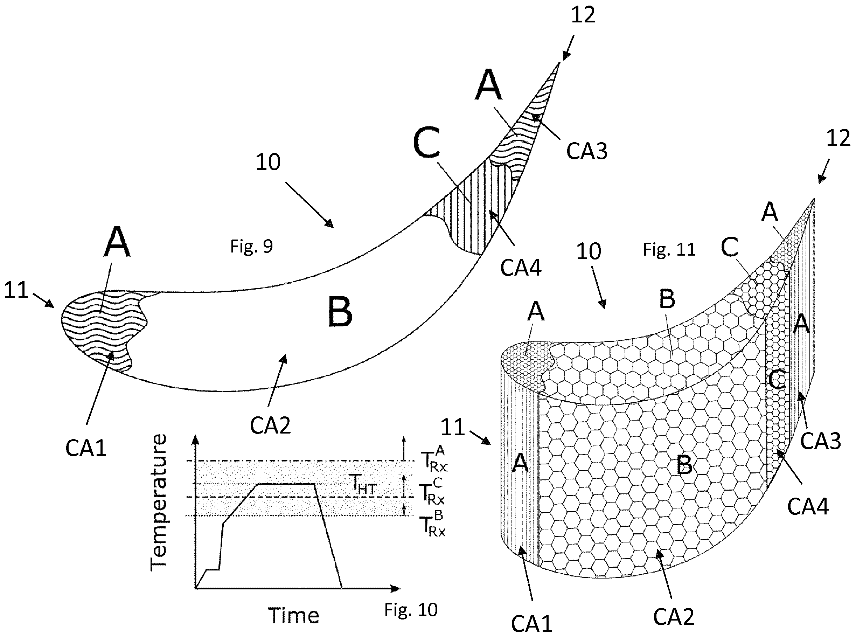

Figures 9 to 12 show an example in which three different process parameters A, B, C are defined, each resulting in different driving forces in the SLM-processed material and therefore in different recrystallization behavior (for example different recrystallization start temperatures and/or different recrystallization grain size).

In one example, in the three different regions shown in Figures 9 to 12, a coarse recrystallized grain size is desired in area CA2 in blade 10 (process parameter B), a finer recrystallized grain size is desired in CA4 (process parameter C) and a fine, non-recrystallized microstructure (no change in grain size and crystallographic orientation) is desired in CA1 and CA3 (process parameter A). One method of obtaining this result would be to heat to a temperature above recrystallization temperatures T_RX_B and T_RX_C, but below recrystallization temperature T_RX_A. CA1 and CA3 will then not recrystallize, and the use of different process parameters for CA2 and CA4 can result in different grain sizes.

The methods are similar with three or more process parameters to the description above for two process parameters. After slicing the 3D file of the component into layers, areas which lay within A volumes CA1 and CA3 are processed with process parameter A, areas laying in B volume CA2 are processed with parameter set B (see Fig. 9, example of a blade 10, in which the leading and trailing edge 11 and 12, respectively, is mainly LCF/TMF loaded and the rest creep loaded) and areas laying in C volume CA4 are processed with parameter set C.

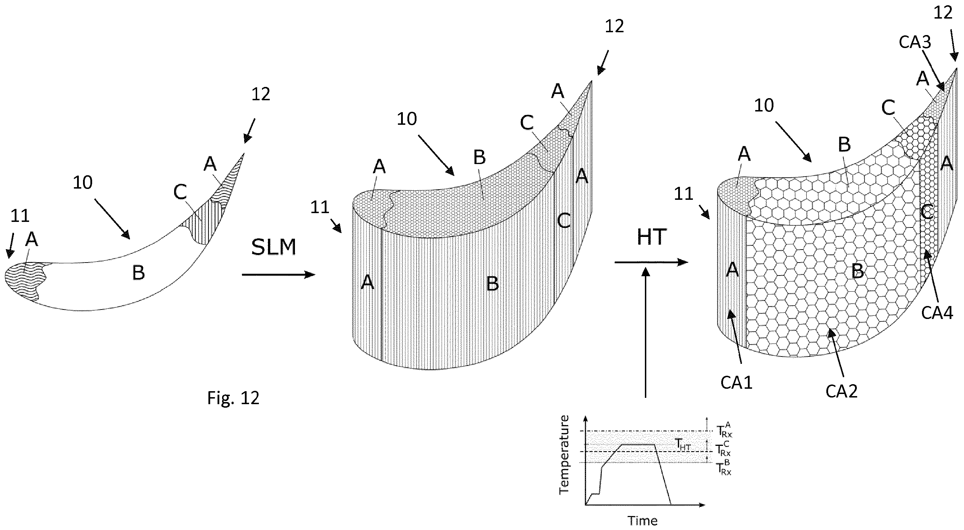

After the SLM process, a component is obtained in which the grain microstructure is mostly homogenous and does not or only slightly differs between A volumes CA1, CA3, B volume CA2 (see Fig. 12, center part) and C volume CA4. However, the driving force for recrystallization and therefore the recrystallization start temperature T_RX_A, T_RX_B and T_RX_C and the resulting grain sizes after heat treatment are different.

The part (in this case blade 10) is then subjected to a recrystallization heat treatment HT, whose holding temperature T_HT lies between T_RX_A and T_RX_C / T_RX_B (see Fig. 10 and Fig. 12). This HT results in a recrystallization of the B volume CA2 and the C volume CA4, which were processed with parameter set B or C respectively, whereas the fine grain structure of the A volumes CA1, CA3 is maintained as no recrystallization takes place in these areas (See Fig. 11 for the resulting blade 10 and Fig.12 for the related process). Due to the higher driving force introduced to volumes C by the parameters C compared to volume B, a finer grain size is obtained in volumes C. The resulting grain size after recrystallization can be tailored by the choice of the process parameters (B/C). Optionally, the HT includes the step of applying fast heating with a heating rate of at least 25 °C/min. The heating is preferably between 25 and 60 °C/min. This can avoid or at least reduce precipitation into an unwanted phase.

An example HT is as follows:
1) heat the component from room temperature (RT) up to a temperature T1, wherein T1 is 50 to 100 °C less than a temperature Ts, at which a drop of the coefficient of thermal expansion starts, then
2) hold the component for a time t1 at T1 to achieve a uniform component temperature, then
3) heat the component by applying a fast heating with a heating rate of at least 25°C/min to a temperature T2 of at least 850 °C, then
4) apply further time/temperature steps to the component depending on the purpose of the heat treatment.

This HT could be appropriate for a component made of a gamma prime strengthened superalloy based on Ni or Co or Fe or combinations thereof, for example, such as in European patent application number EP14167904.3 (method for post-built heat treatment of additively manufactured components made of gamma-prime strengthened superalloys), which is hereby incorporated by reference, particularly with reference to claims 1 to 6.

Using this method, the grain size can be easily tailored in the component with no geometric restriction regarding the different areas. As shown in Fig. 5, when process parameters A and B are applied differently in different layers n1, n2, n3, n4,....., A and/or B volumes can be generated at any place within the component (typically, the only restrictions are the thickness of the layer and the size of the scan lines). In Fig. 5, for instance At* volume CA5 of blade 10' is completely inside the component and the change of structure is therefore not visible in the third image after HT, while other A volumes CA4, CA6 and CA7 are still visible from outside.

An SLM-generated material shows a considerable crystallographic anisotropy, for instance, in case of Ni-based alloys, a strong preferential [100] orientation in the build-up direction. By adjustment of a suitable scanning strategy, also a second preferential axis can be created in the build-up plane, resulting in a pseudo-SX like crystallographic microstructure (polycrystalline, but with three distinct preferred crystallographic directions). An additional embodiment/advantage can also be that the preferred crystallographic [100] orientation (= low Young's modulus) can be maintained at regions (volumes) where it is advantageous (e.g. TMF loaded regions) and recrystallized in regions where no such anisotropy is desired. If the part geometry allows a suitable build orientation, the resulting preferred orientation can be optimized to the prevailing load type (e.g. by choosing a [100] direction (low Young's modulus) along a direction where thermomechanical fatigue is dominant). However, the prevailing load type and direction is likely to change throughout a component and it is possible that the part geometry does not allow using the optimal build up direction. Therefore the anisotropy is not always desired. Further details of this method are described in European patent application EP 12008074.2 (published as EP 2737965) and European patent application EP 13157266.1 (published as EP 2772329), both of which are hereby incorporated by reference. In particular, claims 1 to 12 of EP 12008074.2 and claims 1 to 17 of EP 13157266.1 are relevant.

In order to result in a different driving force for recrystallization and therefore in a different recrystallization behavior (e.g. a different recrystallization temperature T_RX or a different recrystallization grain size), the process parameters (e.g. A and B or A, B and C) must differ in at least one of the following characteristics:
- weld pool size (Weld pool size is the size of the pool melted by the laser. This can be various different shapes and depths)
- energy input (e.g. scan speed, laser power and/or laser mode (continuous wave (CW) or pulsed; energy input is the most important parameter. The preferred embodiment is a continuous mode laser, though a pulsed laser could also be used. Energy density quantification could be linear, area-based or volume-based, depending on the nature of the beam; using more power allows for faster scanning)
- hatch distance (the hatch distance is the distance between passes as the laser tracks across the powder as the material is laid down; the laser normally follows a pre-set scanning strategy, following lines in a pattern somewhat like a farmer ploughing a field)
- layer thickness
- laser beam diameter/intensity distribution/focal plane position
- additional volume exposure/remelting/preheating/reheating
- scanning strategy (unidirectional/bidirectional/rotating)

The method presented here is most interesting for materials such as Ni-, Co-, Fe-based alloys used at high temperature.

However, the general approach is not limited to this class of materials, but can also be applied for all other metal classes processed with SLM where there is an advantage in tailoring the mechanical properties within a component.

As an example, for SLM generated parts made of a Ni-based superalloy recrystallization start temperatures T_RX_A and T_RX_B around 1200°C may be achieved with a difference between both temperatures of 20°C or more.

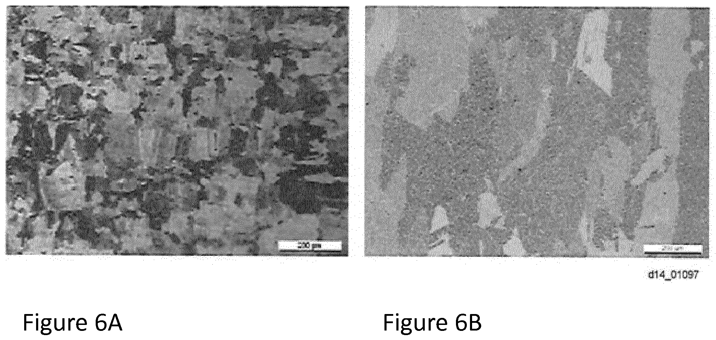

Fig. 6A shows grain structure before crystallization and Fig. 6B shows the same sample with a recrystallized microstructure (grain shape and morphology, recrystallization twins) after heat treatment at 1200°C for 4h. EBSD analysis clearly reveals small columnar grains along the build-up direction and preferred orientations, indicating anisotropic properties.

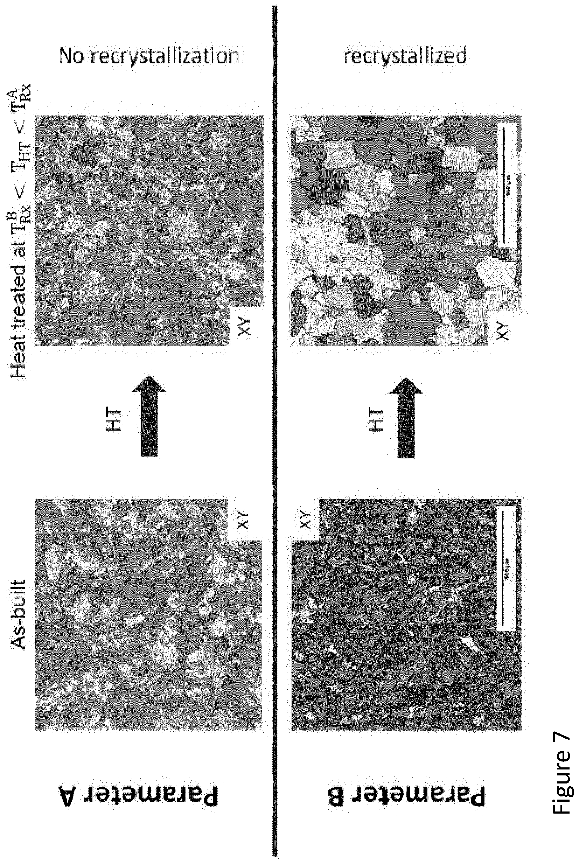

Fig. 6 compares microstructures in area A (Fig. 6A no recrystallization) and area B (Fig. 6B, recrystallization). Accordingly, Fig. 7 compares both microstructures in area A and area B before and after HT. It can be seen that recrystallization only occurred with parameter B, and parameter A did not lead to a recrystallized microstructure.

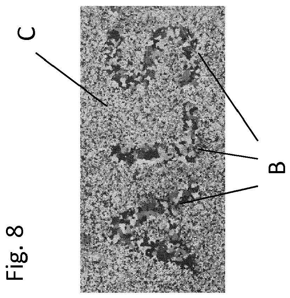

Fig. 8 shows the microstructure of an example part after recrystallization heat treatment at a temperature above T_RX_B and T_RX_C, where a region B (letters) has been processed with parameters B which result in a coarse grain size after heat treatment and a region C (surrounding) processed with a parameter C resulting in a fine grain size after heat treatment.

The SLM process can be executed with following parameter ranges:
1. Parameter range:
   - Energy input [J/mm²]: 0.1-20, preferably 0.4-10
   - Laser power [W]: 10-2000, preferentially 50-500, more preferentially 100-350
   - Scan velocity [mm/s]: 50-6000, preferentially 300-2500
   - Hatch distance [µm]: 1-250 preferentially 50-150
   - Layer thickness [µm]: 5-100 preferentially 20-50
   - Laser beam diameter [µm]: 30-1000, preferentially 50-500
   - Additional volume exposure: yes/no, parameters in range as given above
   - Scanning strategy:
      i. Scan direction: unidirectional/bidirectional/meander scanning
      ii. Scan rotation in each layer: 0-90° degree, preferably 0°, 45°, 67°, 90°
      iii. Scan field partitioning: None/island/Stripes, Scan vector length 0.3-100mm, preferably 1-20mm
2. Value of how much the parameters should be changed:
   - Change of at least one of these parameters by at least 10%, preferably by 20-100% or 20-1000%
3. Parameter effects (examples):
   - Scan velocity increase -> increased driving force -> T_RX decreases (and grain size normally decreases)
   - Additional volume exposure -> decreased driving force -> T_RX increases (and grain size normally increases)
   - Energy input increase-> decreased driving force -> T_RX increases (and grain size normally increases)

### LIST OF REFERENCE NUMERALS

- 10, 10': blade (component)
- 11: leading edge
- 12: trailing edge
- A, B, C: process parameter
- CA1-CA9: component volume area

## Claims

1. Method for manufacturing a component (10, 10'), especially for gas turbines and other thermomachinery, comprising the steps of:
providing a data set for use in an additive manufacturing process;
manufacturing said component (10, 10') by means of said additive manufacturing process according to said data set; and
subjecting said manufactured component (10, 10') to a heat treatment (HT) in order to change the microstructure of said manufactured component (10, 10');
at least two different component volumes (CA1-CA7) are defined within said component (10, 10') prior to the manufacturing step;
at least two different process parameters (A, B) are chosen for said additive manufacturing process, which process parameters (A, B) result in different recrystallization behavior in the material of said component (10, 10');
said additive manufacturing process is executed with one of said at least two process parameters (A, B) being used during manufacturing a first of said at least two component volumes (CA1-CA7), resulting in a first recrystallization behavior in said first component volume, and with the other of said at least two process parameters (A, B) being used during manufacturing a second of said at least two component volumes (CA1-CA7), resulting in a second recrystallization behavior different from said first recrystallization behavior, in said second component volume;
**characterized in that**
said manufactured component (10, 10') is subjected to a heat treatment (HT), with a holding temperature (T_HT), wherein the holding temperature (T_HT) lies above a recrystallization temperature of at least one of said at least two component volumes;
wherein the recrystallization behavior comprises a recrystallization temperature, the first recrystallization behavior comprises a first recrystallization temperature (T_RX_A or T_RX_B) and the second recrystallization behavior comprises a second recrystallization temperature (T_RX_B or T_RX_A), and that said manufactured component (10, 10') is subjected to a heat treatment (HT), with a holding temperature (T_HT) that lies between said first and second recrystallization temperatures (T_RX_A, T_RX_B).

2. Method as claimed in Claim 1, wherein the recrystallization behavior comprises a change in grain size, the first recrystallization behavior comprises a first grain size and the second recrystallization behavior comprises a second grain size different from the first grain size, and wherein the holding temperature (T_HT) lies above a recrystallization temperature of at least two of said at least two component volumes.

3. Method as claimed in one of Claims 1 or 2, wherein at least three different component volumes, namely a first component volume, a second component volume and a third component volume, are defined and three process parameters (A, B, C) are chosen such that after the heat treatment at the holding temperature (T_HT) the first component volume has a first grain size, the second component volume has a second grain size and the third component volume has a third grain size, wherein the first grain size, the second grain size and the third grain size are different from one another.

4. Method as claimed in one of Claims 1 to 3, **characterized in that** said additive manufacturing process is a Selective Laser Melting (SLM) process.

5. Method as claimed in Claim 4, **characterized in that** the material of said component (10, 10') is one of a high temperature Ni-, Co- and Fe-based alloy.

6. Method as claimed in Claim 4, **characterized in that** said at least two process parameters (A, B) differ in at least one of the following characteristics:
• weld pool size
• energy input, especially scan speed and/or laser power and/or laser mode
• hatch distance
• layer thickness
• laser beam diameter/intensity distribution/focal plane position
• additional volume exposure/remelting/preheating/reheating
• scanning strategy, especially unidirectional or bidirectional or rotating.

7. Method as claimed in Claim 1, **characterized in that** said component (10, 10') is part of a turbo machine, especially a gas turbine.

8. Method as claimed in Claim 7, **characterized in that** said component (10, 10') is a blade of a gas turbine.

9. Method as claimed in one of Claims 1 to 8, **characterized in that** the heat treatment comprises the step of applying fast heating with a heating rate of at least 25 °C/min.

10. Method as claimed in one of Claims 1 to 9, **characterized in that** the step of manufacturing includes building up a crystallographic orientation, and the heat treatment removes the crystallographic orientation in at least one component volume.

## Patentansprüche

1. Verfahren zur Herstellung eines Bauteils (10, 10'), insbesondere für Gasturbinen und andere Wärmekraftmaschinen, das folgende Schritte umfasst:
Bereitstellen eines Datensatzes zur Verwendung in einem additiven Herstellungsverfahren;
Herstellen des Bauteils (10, 10') mittels des additiven Herstellungsverfahrens gemäß dem Datensatz; und
Wärmebehandeln (HT) des hergestellten Bauteils (10, 10'), um die Mikrostruktur des hergestellten Bauteils (10, 10') zu verändern;
vor dem Herstellungsschritt werden mindestens zwei unterschiedliche Bauteilvolumen (CA1-CA7) in dem Bauteil definiert;
für das additive Herstellungsverfahren werden mindestens zwei verschiedene Prozessparameter (A, B) gewählt, die ein unterschiedliches Rekristallisierungsverhalten in dem Material des Bauteils (10, 10') bewirken;
wobei das additive Herstellungsverfahren mit einem der mindestens zwei Prozessparameter (A, B) durchgeführt wird, der während der Herstellung eines ersten der mindestens zwei Bauteilvolumen (CA1-CA7) verwendet wird, was ein erstes Rekristallisierungsverhalten in dem ersten Bauteilvolumen bewirkt, wobei der andere der mindestens zwei Prozessparameter (A, B) während der Herstellung eines zweiten der mindestens zwei Bauteilvolumen (CA1-CA7) verwendet wird, was ein von dem ersten Rekristallisierungsverhalten verschiedenes zweites Rekristallisierungsverhalten in dem zweiten Bauteilvolumen bewirkt;
**gekennzeichnet dadurch, dass**
das hergestellte Bauteil einer Wärmebehandlung (HT) bei einer Haltetemperatur (T_HT) unterzogen wird, wobei die Haltetemperatur (T_HT) über einer Rekristallisierungstemperatur mindestens eines der mindestens zwei Bauteilvolumen liegt;
wobei das Rekristallisierungsverhalten eine Rekristallisierungstemperatur umfasst, das erste Rekristallisierungsverhalten umfasst eine erste Rekristallisierungstemperatur (T_RX_A oder T_RX_B) und das zweite Rekristallisierungsverhalten umfasst eine zweite Rekristallisierungstemperatur (T_RX_B oder T_RX_A), wobei das hergestellte Bauteil (10, 10') einer Wärmebehandlung (HT) bei einer Haltetemperatur (T_HT) unterzogen wird, die zwischen der ersten und der zweiten Rekristallisierungstemperatur (T_RX_A, T_RX_B) liegt.

2. Verfahren nach Anspruch 1, wobei das Rekristallisierungsverhalten eine Änderung der Korngröße umfasst, das erste Rekristallisierungsverhalten umfasst eine erste Korngröße und das zweite Rekristallisierungsverhalten umfasst eine von der ersten Korngröße verschiedene zweite Korngröße, wobei die Haltetemperatur (T_HT) über einer Rekristallisierungstemperatur mindestens zweier der mindestens zwei Bauteilvolumen liegt.

3. Verfahren nach Anspruch 1 oder 2, wobei mindestens drei unterschiedliche Bauteilvolumen, nämlich ein erstes Bauteilvolumen, ein zweites Bauteilvolumen und ein drittes Bauteilvolumen definiert und drei Prozessparameter (A, B, C) gewählt werden, so dass das erste Bauteilvolumen nach der Wärmebehandlung bei der Haltetemperatur (T_HT) eine erste Korngröße aufweist, das zweite Bauteilvolumen eine zweite Korngröße aufweist und das dritte Bauteilvolumen eine dritte Korngröße aufweist, wobei die erste Korngröße, die zweite Korngröße und die dritte Korngröße voneinander verschieden sind.

4. Verfahren nach Anspruch 1 bis 3, **gekennzeichnet dadurch, dass** es sich bei dem additiven Herstellungsverfahren um ein selektives Laserschmelzen (SLM) handelt.

5. Verfahren nach Anspruch 4, **gekennzeichnet dadurch, dass** es sich bei dem Material des Bauteils (10, 10') um eine Hochtemperatur-Ni-, Co-, oder Fe-Basislegierung handelt.

6. Verfahren nach Anspruch 4, **gekennzeichnet dadurch** sich mindestens zwei Prozessparameter (A, B) hinsichtlich mindestens einer der folgenden Eigenschaften unterscheiden:
- Schmelzbadgröße
- Energiezufuhr, insbesondere Scangeschwindigkeit, Laserleistung und/oder Lasermodus
- Spurabstand
- Schichtdicke
- Laserstrahldurchmesser/Intensitätsverteilung/Brennebenenposition
- zusätzliche Volumenexposition/Umschmelzen/Vorwärmen/Nachwärmen
- Scanstrategie, insbesondere unidirektional, bidirektional oder rotierend.

7. Verfahren nach Anspruch 1, **gekennzeichnet dadurch, dass** das Bauteil (10, 10') ein Teil einer Strömungsmaschine, insbesondere einer Gasturbine, ist.

8. Verfahren nach Anspruch 7, **gekennzeichnet dadurch, dass** das Bauteil (10, 10') eine Schaufel einer Gasturbine ist.

9. Verfahren nach einem der Ansprüche 1 bis 8, **gekennzeichnet dadurch, dass** die Wärmebehandlung einen Schritt umfasst, in dem das Schnellerwärmen mit einer Aufheizrate von mindestens 25°C/min angewandt wird.

10. Verfahren nach einem der Ansprüche 1 bis 9, **gekennzeichnet dadurch, dass** der Herstellungsschritt die Herstellung einer kristallografischen Orientierung umfasst und dass die kristallografische Orientierung in mindestens einem Bauteilvolumen durch die Wärmebehandlung entfernt wird.

## Revendications

1. Procédé de fabrication d'un composant (10, 10'), plus spécialement pour des turbines à gaz et d'autres turbomachines, comprenant les étapes suivantes :
la fourniture d'un ensemble de données destiné à être utilisé dans un processus de fabrication additif ;
fabrication dudit composant (10, 10') au moyen dudit processus de fabrication additif selon ledit ensemble de données ; et
la soumission dudit composant (10, 10') fabriqué à un traitement thermique (HT) afin de modifier la microstructure dudit composant (10, 10') fabriqué ;
au moins deux volumes de composants différents (CA1-CA7) étant définis dans ledit composant (10, 10') avant l'étape de fabrication ;
au moins deux paramètres de processus différents (A, B) étant choisis pour ledit processus de fabrication additif, ces paramètres de processus (A, B) provoquant un comportement de recristallisation différent dans le matériau dudit composant (10, 10') ;
ledit processus de fabrication additif étant exécuté avec un desdits au moins deux paramètres de processus (A, B) utilisés pendant la fabrication d'un premier desdits au moins deux volumes de composant (CA1-CA7), afin d'obtenir un premier comportement de recristallisation dans ledit premier volume de composant et avec l'autre desdits au moins deux paramètres de processus (A, B) utilisés pendant la fabrication d'un deuxième desdits au moins deux volumes de composant (CA1-CA7), afin d'obtenir un deuxième de recristallisation, différent dudit comportement de recristallisation, dans ledit deuxième volume de composant ;
**caractérisé en ce que**
ledit composant fabriqué (10, 10') est soumis à un traitement thermique (HT), avec une température de maintien (T_HT), la température de maintien (T_HT) se trouvant au-dessus d'une température de recristallisation d'au moins desdits au moins deux volumes de composant ;
le comportement de recristallisation comprenant une température de recristallisation, le premier comportement de recristallisation comprenant une première température de recristallisation (T_RX_A ou T_RX_B) et le deuxième comportement de recristallisation comprenant une deuxième température de recristallisation (T_RX_B ou T_RX_A) et **en ce que** ledit composant fabriqué (10, 10') est soumis à un traitement thermique (HT), avec une température de maintien (T_HT) qui se trouve entre lesdites première et deuxième températures de recristallisation (T_RX_A, T_RX_B).

2. Procédé selon la revendication 1, dans lequel le comportement de recristallisation comprend un changement de taille de grain, le premier comportement de recristallisation comprend une première taille de grain et le deuxième comportement de recristallisation comprend une deuxième taille de grain différente de la première taille de grain, et dans lequel la température de maintien (T_HT) se trouve au-dessus d'une température de recristallisation d'au moins deux desdits au moins deux volumes de composant.

3. Procédé selon l'une des revendications 1 ou 2, dans lequel au moins trois volumes de composant différents, à savoir un premier volume de composant, un deuxième volume de composant et un troisième volume de composant, sont définis et trois paramètres de processus (A, B, C) sont choisis de façon à ce que, après le traitement thermique à la température de maintien (T_HT), le premier volume de composant ait une première taille de grain, le deuxième volume de composant ait une deuxième taille de grain et le troisième volume de composant ait une troisième taille de grain, la première taille de grain, la deuxième taille de grain et la troisième taille de grain étant différentes entre elles.

4. Procédé selon l'une des revendications 1 à 3, **caractérisé en ce que** ledit processus de fabrication additif est un processus « Selective Laser Melting » (SLM).

5. Procédé selon la revendication 4, **caractérisé en ce que** le matériau dudit composant (10, 10') est un parmi un alliage à haute température à base de Ni, Co et Fe.

6. Procédé selon la revendication 4, **caractérisé en ce que** lesdits au moins deux paramètres de processus (A, B) diffèrent dans au moins une des caractéristiques suivantes :
• taille du bain de soudage
• apport d'énergie, plus particulièrement vitesse de balayage et/ou puissance laser et/ou mode laser
• distance de hachage
• épaisseur de couche
• diamètre/distribution d'intensité/position du plan focal du rayon laser
• exposition/refusion/préchauffage/rechauffage d'un volume additionnel
• stratégie de balayage, plus particulièrement unidirectionnel ou bidirectionnel ou rotatif.

7. Procédé selon la revendication 1, **caractérisé en ce que** ledit composant (10, 10') fait partie d'une turbomachine, plus particulièrement d'une turbine à gaz.

8. Procédé selon la revendication 7, **caractérisé en ce que** ledit composant (10, 10') est une pale d'une turbine à gaz.

9. Procédé selon l'une des revendications 1 à 8, **caractérisé en ce que** le traitement thermique comprend l'étape d'application d'un chauffage rapide avec une vitesse de chauffage d'au moins 25°C/min.

10. Procédé selon l'une des revendications 1 à 9, **caractérisé en ce que** l'étape de fabrication comprend la formation d'une orientation cristallographique et le traitement thermique élimine l'orientation cristallographique dans au moins un volume de composant.
